# FASCICULE DE BREVET EUROPEEN

(11) **EP 3 923 086 B1**
(45) Date de publication et mention de la délivrance du brevet: **17.12.2025**
(21) Numéro de dépôt: 20179601.8
(22) Date de dépôt: 12.06.2020
(51) Int. Cl.: G04B 29/04, G04B 29/00, G04B 29/02

(54) **MODULE MOTEUR POUR UN MOUVEMENT HORLOGER**
ANTRIEBSMODUL FÜR EIN UHRWERK
MOTOR MODULE FOR A CLOCK MOVEMENT

(43) Date de publication de la demande: 15.12.2021
(73) Titulaire: ETA SA Manufacture Horlogère Suisse, 2540 Grenchen (CH)
(72) Inventeur: BALMER, Raphaël, 2824 Vicques (CH)
(74) Mandataire: ICB SA

(56) Documents cités:
- CH-A2- 700 987
- CH-A2- 713 547

## Description

### Domaine technique

L'invention concerne un module moteur pour un mouvement horloger. Un tel module moteur est notamment destiné à l'entraînement des aiguilles d'une pièce d'horlogerie comprenant le mouvement horloger.

L'invention concerne également un mouvement horloger comportant un tel module moteur, ainsi qu'une pièce d'horlogerie comportant un tel mouvement horloger. La pièce d'horlogerie est par exemple une montre.

L'invention concerne également un procédé d'assemblage d'un tel module moteur.

### Arrière-plan technologique

On connaît des pièces d'horlogerie modulaires. Très répandues dans l'horlogerie électronique, elles sont moins fréquentes en horlogerie mécanique, où la construction par modules, en général conçue pour décliner un même mouvement mécanique de base en plusieurs calibres avec des fonctionnalités ou une présentation différente, se révèle rarement moins coûteuse qu'une fabrication traditionnelle. Seuls certains mécanismes additionnels, réalisés sur des planches additionnelles, sont relativement répandus. Un des principaux modules d'une telle pièce d'horlogerie modulaire est le module moteur. Un tel module moteur pour mouvement horloger comporte classiquement une platine portant un ou plusieurs rouages, et un pont rouage monté sur la platine. Le pont rouage délimite avec la platine un espace à l'intérieur duquel, outre les rouages, des éléments électromécaniques sont logés, tels que par exemple des rotors, des stators, ou encore des bobines. Le module moteur peut être mécanique, et donc à remontage automatique. Il peut également s'agir d'un un module moteur à quartz.

Lors de l'assemblage du module moteur, une fois les rouages posés sur la platine, il est connu d'utiliser une entretoise d'espacement entre le pont rouage et la platine. Une vis de pontage fixe ensuite la platine sur l'entretoise. Une telle solution à base d'entretoise est par exemple décrite dans le document brevet CH 588 108 B5. Toutefois, une telle fixation par vis et entretoise présente l'inconvénient d'être peu souple et ne permet pas de démonter facilement et en peu de temps les pièces du module moteur. Une telle opération de démontage des pièces peut s'avérer en effet nécessaire en cas de maintenance à effectuer sur le module moteur. CH 700 987 A2 divulgue le montage d'un pont à une platine au moyen de dispositifs de fixation élastique comprenant un élément saillant et un organe élastique. CH 713 547 A2 concerne un mouvement horloger antichoc avec des tiges en carbone assurant conjointement la fixation des pièces.

Une autre solution d'assemblage connue consiste à engager le pont rouage sur des pivots montés dans la platine, en s'aidant pour cela de tenons qui font saillie depuis une face extérieure de la platine et qui permettent un alignement et un centrage du pont rouage vis-à-vis de la platine. Le pont rouage est alors légèrement chassé sur la platine, de manière à obtenir une première tenue du pont. Une opération de thermo-rivetage est ensuite appliquée sur les tenons, ce qui permet, par chauffage des tenons, d'obtenir une déformation de ces derniers et d'ainsi assurer la solidarisation du pont rouage à la platine. Toutefois, un problème posé par ce type d'assemblage du module moteur est qu'une fois le pont rouage thermo-riveté sur la platine, il n'est plus possible de démonter les pièces du module moteur sans occasionner un arrachage des pièces et donc des dégâts mécaniques sur le module. En outre, un autre inconvénient d'un tel assemblage est que les tenons sont insuffisants pour garantir une bonne tenue en place du pont rouage sur la platine. Par conséquent, le pont rouage est mal plaqué sur la platine et peut sortir du guidage des tenons, et certains pivots peuvent en outre être désengagés lors du thermo-rivetage. Les ébats entre les rouages ne sont alors plus garantis.

### Résumé de l'invention

L'invention a donc pour but de fournir un moteur pour un mouvement horloger, permettant de démonter et remonter les pièces du module moteur sans occasionner un arrachage des pièces, tout en garantissant une force de plaquage suffisante du pont rouage sur la platine permettant de garantir les ébats entre les rouages.

A cet effet, l'invention concerne un module moteur pour un mouvement horloger, et qui comprend les caractéristiques mentionnées dans la revendication indépendante 1.

Des formes particulières du module moteur sont définies dans les revendications dépendantes 2 à 5.

Grâce à la présence, sur le pont rouage, de moyens de clippage du pont rouage sur la platine, il est possible pour un utilisateur de pouvoir démonter et remonter facilement les pièces du module moteur, sans occasionner un arrachage ou une détérioration mécanique de ces dernières. En outre, de tels moyens de clippage exercent une force de plaquage suffisante pour permettre le maintien mécanique du pont rouage sur la platine, et ainsi garantir les ébats entre les rouages.

Avantageusement, le pont rouage est constitué d'un matériau amagnétique. Un tel matériau amagnétique présente de préférence un haut module d'élasticité. Ceci permet d'assurer un clippage optimal du pont rouage sur la platine, et de garantir une force de plaquage optimisée entre ces deux pièces.

A cet effet, l'invention concerne également un mouvement horloger comprenant le module moteur décrit ci-dessus, et qui comprend les caractéristiques mentionnées dans la revendication dépendante 6.

A cet effet, l'invention concerne également une pièce d'horlogerie comportant le mouvement horloger décrit ci-dessus, et qui comprend les caractéristiques mentionnées dans la revendication dépendante 7.

A cet effet, l'invention concerne également un procédé d'assemblage du module moteur selon la revendication 8. Le procédé d'assemblage selon l'invention permet de supprimer l'opération de thermo-rivetage, et d'ainsi économiser au moins une opération de montage dans le procédé. Ceci permet ainsi à l'opérateur effectuant la pose des rouages de pouvoir également effectuer le clippage du pont rouage sur la platine, sur le même poste de travail. Ainsi, le procédé selon l'invention permet d'éviter un déplacement du module moteur sous un autre poste de soudage ou de thermo-rivetage, et d'éliminer ainsi le risque de désengagement de certains pivots. Le procédé selon l'invention permet également de gagner en temps d'assemblage du module moteur.

### Brève description des figures

Les buts, avantages et caractéristiques du module moteur pour mouvement horloger selon l'invention apparaîtront mieux dans la description suivante sur la base d'au moins une forme d'exécution non limitative illustrée par les dessins sur lesquels :
- la figure 1 est une vue en perspective éclatée d'un module moteur pour mouvement horloger selon un premier mode de réalisation de l'invention, le module moteur comprenant un pont rouage muni de trois pattes de clippage ;
- la figure 2 est une vue en perspective du module moteur de la figure 1, en configuration assemblée ;
- la figure 3 est une vue en perspective d'une des pattes de clippage du module moteur de la figure 1, dans la configuration éclatée du module moteur ;
- la figure 4 est une vue analogue à celle de la figure 3, dans la configuration assemblée du module moteur représentée sur la figure 2 ; et
- la figure 5 est une vue en perspective d'un module moteur pour mouvement horloger selon un deuxième mode de réalisation de l'invention, en configuration assemblée.

### Description détaillée de l'invention

Dans la description suivante, il est fait référence à un mouvement horloger muni d'un module moteur. Les composants usuels du mouvement horloger, qui sont bien connus d'un homme du métier dans ce domaine technique, ne sont décrits que de manière simplifiée ou pas décrits du tout. L'homme du métier saura en effet adapter ces différents composants et les faire coopérer pour le fonctionnement du mouvement horloger.

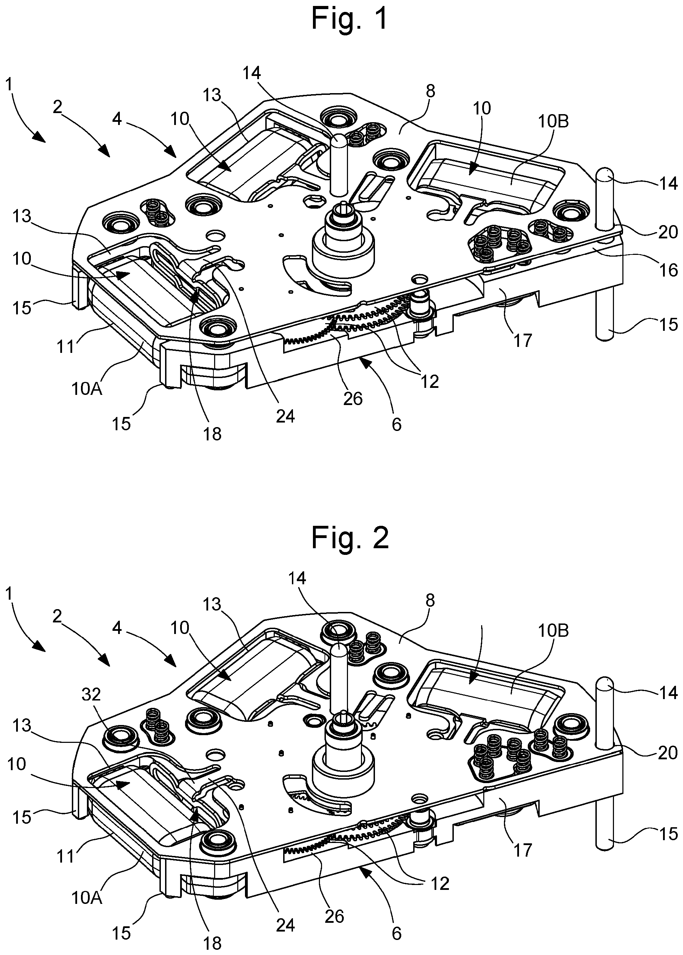

Les figures 1 et 2 représentent une partie d'une pièce d'horlogerie 1, qui comprend un mouvement horloger 2. La pièce d'horlogerie 1 est par exemple une montre mécanique ou encore une montre à quartz. Le mouvement horloger 2 comporte un module moteur 4, qui est représenté sur les figures 1 à 4 selon un premier mode de réalisation de l'invention. Le module moteur 4 est configuré pour être fixé, par exemple par vissage, collage ou encore thermo-rivetage, sur une carte de circuit imprimé (non représentée) du mouvement horloger 2. Le module moteur 4 comprend une platine 6 et un pont rouage 8 monté sur la platine 6. Le module moteur 4 comprend également plusieurs composants électromécaniques 10, tels que par exemple un stator 10A, un rotor (non représenté sur les figures) et une ou plusieurs bobines 10B. Dans l'exemple de réalisation particulier illustré sur les figures 1 et 2, les composants électromécaniques 10A, 10B sont agencés dans des logements 11 prévus à cet effet, sous le pont rouage 8, de tels logements 11 étant par exemple ménagés au sein de la platine 6. Les composants électromécaniques 10A, 10B sont ainsi montés sur la carte de circuit imprimé. Des ouvertures d'accès 13 correspondantes sont par exemple pratiquées dans le pont rouage 8. De telles ouvertures 13 sont agencées en regard des composants électromécaniques 10A, 10B selon la direction verticale. Les ouvertures 13 permettent d'accéder à ces composants 10A, 10B depuis l'extérieur du module moteur 4 sans avoir besoin de démonter ce dernier. Chaque ouverture 13 forme une portion évidée dans le pont rouage 8. De préférence, le module moteur 4 comprend également au moins une goupille 14 de pré-positionnement du pont rouage 8 sur la platine 6. Dans l'exemple de réalisation particulier illustré sur les figures 1 et 2, la platine 6 comprend deux goupilles de pré-positionnement 14. De telles goupilles 14 servent de référence pour le montage du pont rouage 8 sur la platine 6.

La platine 6 porte plusieurs rouages 12. La platine 6 comprend par exemples plusieurs pattes d'appui 15 réhaussant un support de platine 17 sur lequel sont montés les rouages 12.

Le pont rouage 8 présente une forme sensiblement plane qui définit un plan principal d'extension P1. Le pont rouage 8 comprend des moyens 18 de clippage du pont rouage 8 sur la platine 6. De préférence, comme visible sur les figures 1 et 2, le pont rouage 8 comprend également au moins un orifice traversant 20 de réception de tenon. Dans l'exemple de réalisation particulier illustré sur les figures 1 et 2, le pont rouage 8 comprend deux orifices traversants 20 de réception de goupille. Chaque orifice traversant 20 reçoit une des goupilles 14. Le pont rouage 8 est par exemple constitué d'un matériau amagnétique. Le module d'élasticité du matériau amagnétique présente typiquement une valeur supérieure ou égale à 190 000 MPa. De préférence, le pont rouage 8 est constitué d'un matériau choisi parmi le groupe consistant en : un alliage austénitique durcissable à base de cobalt-chrome-nickel, notamment un alliage connu sous l'appellation commerciale PHYNOXO ; un acier inox amagnétique, notamment un acier inox amagnétique connu sous l'appellation commerciale SANDVIK 13RM19^{©} ; un alliage amagnétique à base de cuivre-nickel-zinc, notamment un alliage amagnétique connu sous l'appellation commerciale ARCAP^{©} ; et du laiton. Le pont rouage 8 et les moyens de clippage 18 forment préférentiellement une seule et même pièce de matière, et sont par exemple fabriqués via un procédé d'estampage (sans que cela ne soit limitatif dans le cadre de la présente invention).

De préférence, la platine 6 comporte des moyens complémentaires 22 de coopération avec les moyens de clippage 18. Les moyens complémentaires 22 sont configurés pour coopérer avec les moyens de clippage 18 pour permettre le blocage en translation, notamment verticale, du pont rouage 8 sur la platine 6. De préférence, les moyens de clippage 18 comprennent au moins une patte de clippage 24 qui fait saillie depuis une face inférieure 26 du pont rouage 8. Dans l'exemple de réalisation particulier illustré sur les figures 1 et 2, les moyens de clippage 18 comprennent trois pattes de clippage 24. Selon cet exemple de réalisation particulier, les moyens complémentaires 22 comprennent trois ergots de blocage 28. Chaque ergot de blocage 28 fait saillie depuis une face latérale 30 du support de platine 17 et est configuré pour coopérer élastiquement avec une des pattes de clippage 24.

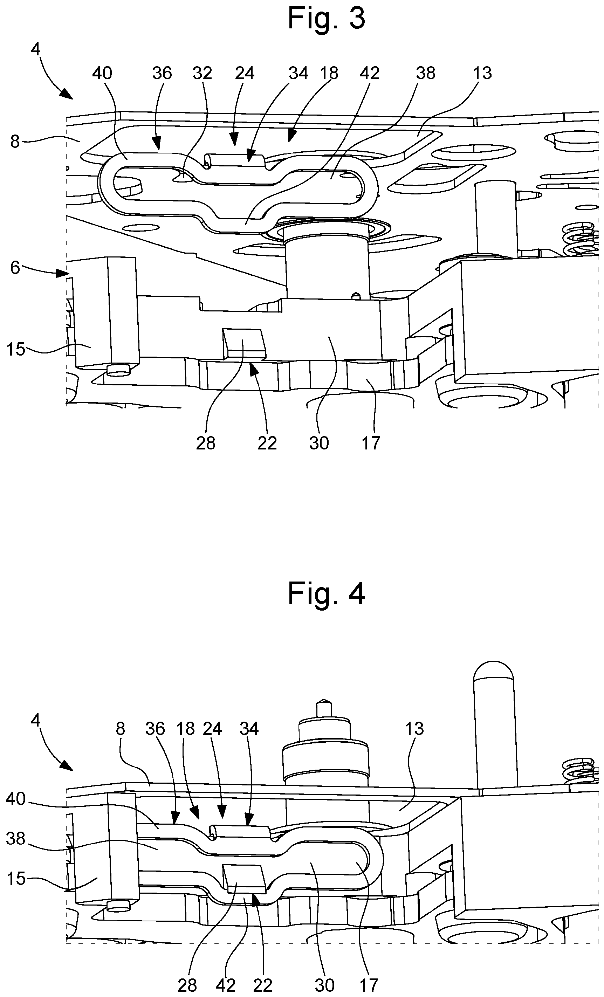

Les figures 3 et 4 illustrent la coopération entre une des pattes de clippage 24 du pont rouage 8 et un des ergots de blocage 28 de la platine 6. Plus précisément, dans l'exemple de réalisation particulier illustré sur ces figures, chaque patte de clippage 24 est ménagée dans une des portions évidées 13 du pont rouage 8, et comprend une première partie 32 et une deuxième partie 34. Comme visible sur les figures 1 et 2, la première partie 32 s'étend dans le plan principal d'extension P1 défini par le pont rouage 8 et forme une partie de maintien de la patte 24. La deuxième partie 34 est venue de matière avec la première partie 32 et est repliée en direction inclinée par rapport au plan principal d'extension P1. Plus précisément, la deuxième partie 34 s'étend dans une direction sensiblement perpendiculaire à la direction d'extension de la première partie 32, et est orientée vers le bas depuis la face inférieure 26 du pont rouage 8.

La deuxième partie 34 de chaque patte de clippage 24 présente une extrémité libre 36. De préférence, comme visible sur les figures 1 à 4, l'extrémité libre 36 de la deuxième partie 34 forme un organe élastique de clippage qui présente une portion centrale évidée 38 et un pourtour fermé continu 40. Le pourtour fermé continu 40 délimite la portion centrale évidée 38. Le pourtour fermé continu 40 de l'organe élastique de clippage 36 présente préférentiellement une partie de sollicitation élastique 42. Comme illustré sur la figure 4, la partie de sollicitation élastique 42 est configurée pour coopérer élastiquement avec un des ergots de blocage 28 lorsque l'ergot 28 s'étend à l'intérieur de la portion centrale évidée 38 de l'extrémité libre 36. Cette coopération entre chaque ergot de blocage 28 et chaque partie de sollicitation élastique 42 d'une patte de clippage 24 correspondante permet le blocage en translation, notamment verticale, du pont rouage 8 sur la platine 6.

Le procédé d'assemblage du module moteur 4 selon l'invention va maintenant être décrit. Les rouages 12 et les composants électromécaniques 10 sont initialement placés dans leurs emplacements et logements 11 respectifs au sein de la platine 6. Le procédé comprend une phase de montage du pont rouage 8 sur la platine 6. Cette phase de montage comprend par exemple une étape initiale de pré-positionnement du pont rouage 8 sur la platine 6. Pour ce faire, le pont rouage 8 est guidé sur les goupilles de pré-positionnement 14, en insérant ces derniers dans les orifices de réception 20 du pont rouage 8. La phase de montage comprend une étape suivante de clippage du pont rouage 8 sur la platine 6. Pour ce faire, dans le mode de réalisation particulier représenté sur les figures 1 à 4, l'extrémité libre 36 de chaque patte de clippage 24 est amenée jusqu'à la position illustrée sur la figure 4, de manière à ce que la partie de sollicitation élastique 42 coopère élastiquement avec un des ergots 28 de la platine 6 pour le blocage en translation, notamment verticale, du pont rouage 8 sur la platine 6.

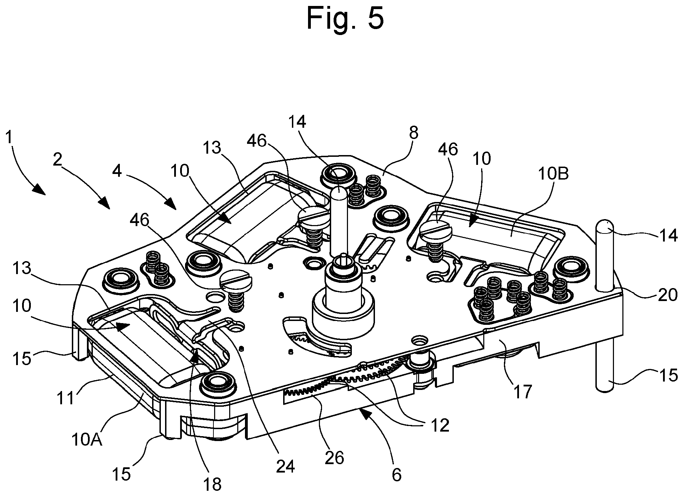

Le module moteur 4 selon un deuxième mode de réalisation de l'invention va maintenant être décrit en référence à la figure 5. Dans ce deuxième mode de réalisation de l'invention, les éléments décrits avec les mêmes références numériques que ceux du premier mode de réalisation sont identiques à ces derniers et ne seront donc pas décrits en détail à nouveau. Dans ce deuxième mode de réalisation de l'invention, le module moteur 4 comprend en outre des moyens 46 de fixation verticale du pont rouage 8 sur la platine 6. Les moyens de fixation verticale 46 sont par exemple constitués d'une ou plusieurs vis de fixation, typiquement trois vis de fixation comme dans l'exemple illustré sur la figure 5.

## Revendications

1. Module moteur (4) pour un mouvement horloger (2), le module moteur (4) comprenant une platine (6) portant un ou plusieurs rouages (12), et un pont rouage (8) monté sur la platine (6), le pont rouage (6) comprenant des moyens (18) de clippage du pont rouage (8) sur la platine (6), **caractérisé en ce que** les moyens de clippage (18) comprennent au moins une patte de clippage (24) faisant saillie depuis une face inférieure (26) du pont rouage (8), la ou chaque patte de clippage (24) est ménagée dans une portion évidée (13) du pont rouage (8), et comprend une première partie (32) de maintien de la patte s'étendant dans un plan principal d'extension (P1) défini par le pont rouage (8) et une deuxième partie (34) venue de matière avec la première partie (32) et s'étendant dans une direction sensiblement perpendiculaire à la direction d'extension de la première partie (32) et la deuxième partie (34) présentant une extrémité libre (36), ladite extrémité libre (36) formant un organe élastique de clippage présentant une portion centrale évidée (38) et un pourtour fermé continu (40) délimitant ladite portion centrale évidée (38) et la platine (6) étant munie de moyens complémentaires (22) de coopération avec les moyens de clippage (18) du pont rouage (8), pour le blocage en translation, notamment verticale, du pont rouage (8) sur la platine (6), lesdits moyens complémentaires (22) de coopération avec les moyens de clippage (18) comprenant au moins un ergot de blocage (28) faisant saillie depuis une face latérale (30) de la platine (6) et ledit ergot (28) étant configuré pour coopérer élastiquement avec la ou une des patte(s) de clippage (24) et le pourtour fermé continu (40) de l'organe élastique de clippage (36) présentant une partie de sollicitation élastique (42) configurée pour coopérer élastiquement avec l'ergot de blocage (28) lorsque l'ergot (28) s'étend à l'intérieur de la portion centrale évidée (38), pour le blocage en translation, notamment verticale, du pont rouage (8) sur la platine (6).

2. Module moteur (4) selon la revendication précédente, **caractérisé en ce qu'**il comprend en outre au moins une goupille (14) de pré-positionnement du pont rouage (8) sur la platine (6) ; et **en ce que** le pont rouage (8) est muni d'au moins un, de préférence deux, orifice(s) traversant(s) (20) de réception de goupille.

3. Module moteur (4) selon l'une quelconque des revendications précédentes, **caractérisé en ce que** le pont rouage (8) est constitué d'un matériau amagnétique.

4. Module moteur (4) selon l'une quelconque des revendications précédentes, **caractérisé en ce que** le pont rouage (8) est constitué d'un matériau choisi parmi le groupe consistant en : un alliage austénitique durcissable à base de cobalt-chrome-nickel, notamment un alliage connu sous l'appellation commerciale PHYNOX^{©} ; un acier inox amagnétique, notamment un acier inox amagnétique connu sous l'appellation commerciale SANDVIK 13RM19^{©} ; un alliage amagnétique à base de cuivre-nickel-zinc, notamment un alliage amagnétique connu sous l'appellation commerciale ARCAP^{©} ; et du laiton.

5. Module moteur (4) selon l'une quelconque des revendications précédentes, **caractérisé en ce qu'**il comprend en outre des moyens (46) de fixation verticale du pont rouage (8) sur la platine (6), notamment une ou plusieurs vis de fixation.

6. Mouvement horloger (2) comprenant un module moteur (4), **caractérisé en ce que** le module moteur (4) est conforme à l'une quelconque des revendications précédentes.

7. Pièce d'horlogerie (1) comprenant un mouvement horloger (2), **caractérisée en ce que** le mouvement horloger (2) est conforme à la revendication 6.

8. Procédé d'assemblage d'un module moteur (4) pour un mouvement horloger (2) selon la revendication 6, le module moteur (4) comprenant une platine (6) portant un ou plusieurs rouages (12), et un pont rouage (8), le procédé comprenant une phase de montage du pont rouage (8) sur la platine (6), **caractérisé en ce que** le pont rouage (8) comprend des moyens de clippage (18) et **en ce que** la phase de montage du pont rouage (8) sur la platine (6) comprend une étape de clippage du pont rouage (8) sur la platine (6).

## Patentansprüche

1. Motormodul (4) für ein Uhrwerk (2), wobei das Motormodul (4) eine Platine (6), die ein oder mehrere Räder (12) trägt, und eine auf der Platine (6) montierte Räderwerkbrücke (8) umfasst, wobei die Räderwerkbrücke (6) Schnappmittel (18) zum Einrasten der Räderwerkbrücke (8) auf der Platine (6) umfasst, **dadurch gekennzeichnet, dass**
die Schnappmittel (18) mindestens eine Schnapplasche (24) umfassen, die von einer Unterseite (26) der Räderwerkbrücke (8) vorspringt, wobei die oder jede Schnapplasche (24) in einer Ausnehmung (13) der Räderwerkbrücke (8) angeordnet ist und einen ersten Abschnitt (32) zur Halterung der Lasche umfasst, der sich in einer durch die Räderwerkbrücke (8) definierten Haupterstreckungsebene (P1) erstreckt, sowie einen zweiten Abschnitt (34), der einstückig mit dem ersten Abschnitt (32) ausgebildet ist und sich in einer im Wesentlichen zur Erstreckungsrichtung des ersten Abschnitts (32) senkrechten Richtung erstreckt, wobei der zweite Abschnitt (34) ein freies Ende (36) aufweist, wobei das freie Ende (36) ein elastisches Schnappelement mit einer zentralen Ausnehmung (38) und einem geschlossenen, umlaufenden Rand (40) bildet, der die zentrale Ausnehmung (38) begrenzt, und wobei die Platine (6) mit komplementären Mitteln (22) zur Zusammenarbeit mit den Schnappmitteln (18) der Räderwerkbrücke (8) versehen ist, zur Blockierung gegen translatorische Bewegung, insbesondere in vertikaler Richtung, der Räderwerkbrücke (8) auf der Platine (6), wobei die genannten komplementären Mittel (22) zur Zusammenarbeit mit den Schnappmitteln (18) mindestens einen Rastvorsprung (28) umfassen, der von einer Seitenfläche (30) der Platine (6) vorspringt, und wobei der Rastvorsprung (28) zur elastischen Zusammenarbeit mit der oder einer der Schnapplaschen (24) ausgebildet ist, und wobei der geschlossene, umlaufende Rand (40) des elastischen Schnappelements (36) einen elastisch beanspruchbaren Abschnitt (42) aufweist, der zur elastischen Zusammenarbeit mit dem Rastvorsprung (28) ausgebildet ist, wenn sich der Rastvorsprung (28) innerhalb der zentralen Ausnehmung (38) erstreckt, zur Blockierung gegen translatorische Bewegung, insbesondere in vertikaler Richtung, der Räderwerkbrücke (8) auf der Platine (6).

2. Motormodul (4) nach dem vorstehenden Anspruch, **dadurch gekennzeichnet, dass** es ferner mindestens einen Vorpositionierungsstift (14) für die Räderwerkbrücke (8) auf der Platine (6) umfasst; und dass die Räderwerkbrücke (8) mit mindestens einer, vorzugsweise zwei, durchgehenden Aufnahmeöffnung(en) (20) zur Aufnahme des Stifts versehen ist.

3. Motormodul (4) nach einem der vorhergehenden Ansprüche, **dadurch gekennzeichnet, dass** die Räderwerkbrücke (8) aus einem amagnetischen Material besteht.

4. Motormodul (4) nach einem der vorhergehenden Ansprüche, **dadurch gekennzeichnet, dass** die Räderwerkbrücke (8) aus einem Material besteht, das ausgewählt ist aus der Gruppe bestehend aus: einer aushärtbaren austenitischen Kobalt-Chrom-Nickel-Legierung, insbesondere einer Legierung unter der Handelsbezeichnung PHYNOX^{©}; einem amagnetischen rostfreien Stahl, insbesondere einem amagnetischen rostfreien Stahl unter der Handelsbezeichnung SANDVIK 13RM19^{©}; einer amagnetischen Kupfer-Nickel-Zink-Legierung, insbesondere einer amagnetischen Legierung unter der Handelsbezeichnung ARCAP^{©}; und Messing.

5. Motormodul (4) nach einem der vorhergehenden Ansprüche, **dadurch gekennzeichnet, dass** es ferner Mittel (46) zur vertikalen Befestigung der Räderwerkbrücke (8) auf der Platine (6) umfasst, insbesondere eine oder mehrere Befestigungsschrauben.

6. Uhrwerk (2) mit einem Motormodul (4), **dadurch gekennzeichnet, dass** das Motormodul (4) gemäß einem der vorhergehenden Ansprüche ausgebildet ist.

7. Zeitmesser (1) mit einem Uhrwerk (2), **dadurch gekennzeichnet, dass** das Uhrwerk (2) gemäß Anspruch 6 ausgebildet ist.

8. Verfahren zum Zusammenbau eines Motormoduls (4) für ein Uhrwerk (2) nach Anspruch 6, wobei das Motormodul (4) eine Platine (6) umfasst, die ein oder mehrere Räder (12) trägt, und eine Räderwerkbrücke (8), wobei das Verfahren eine Phase des Montierens der Räderwerkbrücke (8) auf der Platine (6) umfasst, **dadurch gekennzeichnet, dass** die Räderwerkbrücke (8) Schnappmittel (18) umfasst und dass die Phase des Montierens der Räderwerkbrücke (8) auf der Platine (6) einen Schritt des Einrastens der Räderwerkbrücke (8) auf der Platine (6) umfasst.

## Claims

1. Motor module (4) for a horological movement (2), the motor module (4) comprising a plate (6) bearing one or more cogs (12), and a cog bridge (8) mounted on the plate (6), the cog bridge (6) comprising means (18) for clipping the cog bridge (8) onto the plate (6), **characterised in that**
the clipping means (18) comprise at least one clipping tab (24), preferably three clipping tabs (24), projecting from a lower face (26) of the cog bridge (8),
the or each clipping tab (24) is provided in a recessed portion (13) of the cog bridge (8), and comprises a first part (32) for holding the tab extending in a main extension plane (P1) defined by the cog bridge (8), and a second part (34) formed integrally with the first part (32) and extending in a direction substantially perpendicular to the direction of extension of the first part (32) and.
the second part (34) having a free end (36), said free end (36) forming a resilient clipping member having a central recessed portion (38) and a continuous closed periphery (40) delimiting said central recessed portion (38) and.
the plate (6) being provided with complementary means (22) for cooperating with the clipping means (18) of the cog bridge (8), for locking the cog bridge (8) onto the plate (6) in translation, said
the complementary means (22) for cooperating with the clipping means (18) comprising at least one locking lug (28) projecting from a lateral face (30) of the plate (6) and, said lug (28) being configured to cooperate resiliently with the clipping lug or one of the clipping lugs (24) and
the continuous closed periphery (40) of the resilient clipping member (36) having a resilient stressing part (42) configured to cooperate resiliently with the locking lug (28) when the lug (28) extends inside the central recessed portion (38), for locking the cog bridge (8) onto the plate (6) in translation, in particular vertically.

2. Motor module (4) according to the preceding claim, **characterised in that** it further comprises at least one pin (14) for prepositioning the cog bridge (8) on the plate (6); and **in that** the cog bridge (8) is provided with at least one, preferably two, through hole(s) (20) for receiving the pin.

3. Motor module (4) according to any of the preceding claims, **characterised in that** the cog bridge (8) is made from a non-magnetic material.

4. Motor module (4) according to any of the preceding claims, **characterised in that** the cog bridge (8) is made from a material selected from the group consisting of: a hardenable austenitic cobalt-chromium-nickel-based alloy, in particular an alloy known by the trade name PHYNOX^{©}; a non-magnetic stainless steel, in particular a non-magnetic stainless steel known by the trade name SANDVIK 13RM19^{©}; a non-magnetic copper-nickel-zinc-based alloy, in particular a non-magnetic alloy known by the trade name ARCAP^{©}; and brass.

5. Motor module (4) according to any of the preceding claims, **characterised in that** it further comprises means (46) for vertically fixing the cog bridge (8) onto the plate (6), in particular one or more fixing screws.

6. Horological movement (2) comprising a motor module (4), **characterised in that** the motor module (4) is in accordance with any of the preceding claims.

7. Timepiece (1) comprising a horological movement (2), **characterised in that** the horological movement (2) is in accordance with claim 6.

8. Method of assembling a motor module (4) for a horological movement (2) according to claim 6, the motor module (4) comprising a plate (6) bearing one or more cogs (12), and a cog bridge (8), the method comprising a phase of mounting the cog bridge (8) on the plate (6), **characterised in that** the cog bridge (8) comprises clipping means (18) and **in that** the phase of mounting the cog bridge (8) onto the plate (6) comprises a step of clipping the cog bridge (8) onto the plate (6).
